# FASCICULE DE BREVET EUROPEEN

(11) **EP 2 916 406 B1**
(45) Date de publication et mention de la délivrance du brevet: **08.05.2019**
(21) Numéro de dépôt: 15155003.5
(22) Date de dépôt: 13.02.2015
(51) Int. Cl.: H02G 1/06, H02G 1/08, H02G 9/06, H02G 3/04, H02G 9/02, D03D 1/00

(54) **Procédé de protection d'un câble et gaine de protection du câble**
Verfahren zum Schutz eines Kabels, und Schutzhülle des Kabels
Method for protecting a cable and protective sheath of the cable

(30) Priorité: 06.03.2014 FR 1451827; 27.03.2014 FR 1452610
(43) Date de publication de la demande: 09.09.2015
(73) Titulaire: Mecaroute, 92000 Nanterre (FR)
(72) Inventeur: Bompay, Jean-Yves, 60800 Fresnoy-le-Luat (FR)
(74) Mandataire: Laget, Jean-Loup

(56) Documents cités:
- EP-A2- 2 226 543
- WO-A1-2012/144111
- DE-C- 497 118
- FR-A- 1 318 191
- FR-A1- 2 706 695
- FR-A1- 2 749 025
- FR-A1- 2 824 677
- US-A- 5 713 392

## Description

L'invention concerne un procédé de protection d'un réseau enterré, tel qu'un câble ou une canalisation et une gaine de protection du câble, plus particulièrement d'un câble électrique destiné à être enterré.

Il est connu, notamment par les documents FR 2 823 025 et FR 2 874 246, de protéger un câble électrique destiné à être enterré, en l'enrobant d'une gaine longitudinale repliée sur elle-même et fixée par rubanage, spiralage ou par soudage. La gaine se présente sous forme d'une bande souple en géotextile contenant une matière particulaire ou en géotextile non-tissé à une ou plusieurs couches.

Cette bande, une fois repliée autour du câble et fixée, constitue une enveloppe longitudinale de protection mécanique mais qui isole le câble du remblai recouvrant le câble enterré, limitant ainsi la capacité de transit électrique dans le dit câble.

Lorsque le câble est parcouru par un courant électrique, sa température augmente, et l'enveloppe longitudinale se comporte comme un isolant thermique, empêchant la chaleur produite par la circulation du courant dans le câble de diffuser dans le remblai, et limitant de ce fait les performances de transit du câble.

Pour faciliter le transit électrique dans les câbles, certains documents prévoient un apport de sable fin.

Le document FR 2 706 695 décrit un dispositif de protection pour câble électrique enterré constitué d'un textile à deux parois, liées entre elles par des fils, l'espace entre les deux parois étant rempli de sable.

Le document FR 2749 025 décrit une enveloppe de protection pour câble électrique enterré constituée d'une matrice textile chargée d'un matériau pulvérulent aggloméré par un liant thermoplastique. Le document FR 1 318 191 décrit un conduit-gaine à section en U dans lequel sont disposés des câbles électriques. Le conduit-gaine est rempli de sable et fermé par un couvercle.

Le document FR 2 824 677 décrit un procédé d'enfouissement de câbles consistant, dans une tranchée, à déposer une couche d'un mélange intime de sable et de fils textiles continus, à déposer les câbles dessus, et à recouvrir les câbles d'une autre couche du même mélange avant de remblayer la tranchée.

Ces quatre documents prévoient une protection des câbles, notamment contre l'échauffement, par apport de sable, naturel ou enveloppé, et s'appliquent à la protection d'un ensemble de plusieurs câbles électriques.

Le document EP 2 226 543 décrit un dispositif de protection pour tube enterré, constitué d'un revêtement à perforations pour diminuer la résistance au frottement du tube contre la terre environnante, car la surface du tube ne vient plus complètement en contact avec la terre environnante.

Le document US 5 713 392 décrit une enveloppe pour tube, composée d'une gaine à faible coefficient de friction, d'une grille d'un matériau à mailles, et d'un géotextile pour minimiser l'infiltration de saleté dans la grille.

Ces deux documents prévoient une protection des câbles par éloignement de la terre environnante. Leur fonction n'est pas compatible avec celle des quatre premiers documents précités.

Dans le document DE497118 un câble est recouvert d'argile molle, sous forme d'une couche épaisse et l'argile molle est entourée d'un textile.

Un but de la présente invention est de proposer une gaine assurant la diffusion, dans le remblai, de la chaleur produite par la circulation du courant dans le câble.

L'invention a pour objet un procédé de protection d'un câble enfoui et recouvert d'un remblai conforme à la revendication 1.

Avantageusement, la grille est en PEHD, PEBD, PVC ou Polyester.

De manière avantageuse, la grille présente des mailles de dimensions comprises entre 2 x 2 et 6 x 6 mm.

Avantageusement, la grille présente une épaisseur comprise entre 3 et 10 mm.

L'invention a aussi pour objet une gaine adaptée pour la protection d'un câble enfoui et recouvert d'un remblai conforme à la revendication 1, caractérisée en ce qu'elle est en forme de grille constituée par deux réseaux de brins parallèles dont les mailles assurent le passage des éléments fins du remblai jusqu'au contact direct du câble.

Avantageusement, la direction des brins d'un réseau fait avec la direction des brins de l'autre réseau, un angle compris entre 75 et 90°.

De manière avantageuse, l'épaisseur des brins est comprise entre 2 et 5 mm.

Avantageusement, la grille est obtenue par extrusion. D'autres caractéristiques et avantages de l'invention ressortiront de la description qui suit faite avec référence aux dessins annexés dans lesquels :
- La figure 1 représente une vue de dessus de la grille constituant la gaine de protection du câble, selon un exemple de réalisation de l'invention ;
- La figure 2 représente une vue en coupe de la grille selon la ligne AA de la figure 1.
- La figure 3 représente une vue en coupe d'un ensemble de trois câbles électriques disposés dans une gaine de protection constituée par la grille de la figure 1, et dans une tranchée remblayée.

De manière connue, un câble électrique destiné à être enterré est protégé, avant son enfouissement, au moyen d'une gaine longitudinale. Cette gaine est constituée par une bande préalablement posée au sol et sur laquelle est posé le câble, ou directement fixée autour du câble dès son déroulage sans être posée au sol. La bande est ensuite repliée autour du câble, avec un léger recouvrement de ses bords longitudinaux.

Une fixation réciproque des bords longitudinaux est assurée par exemple par soudage à chaud, ou par enrobage au moyen d'un ruban, ou par spiralage.

La bande, repliée autour du câble et fixée, constitue une gaine de protection mécanique pour le câble.

Selon un mode de réalisation de l'invention, cette gaine est constituée par une grille 1 en polyéthylène à haute densité (PEHD). La grille est constituée par deux réseaux de brins parallèles.

La direction des brins 2 d'un réseau fait un angle de préférence compris entre 75 et 90° avec la direction des brins 3 de l'autre réseau. Les brins 2 d'un réseau sont fixés aux brins 3 de l'autre réseau par tout moyen connu approprié. La grille ainsi réalisée est constituée de mailles 4 de forme rhomboïdale mais proche d'une forme carrée.

Dans le cadre d'un exemple de réalisation, les dimensions suivantes sont données à titre indicatif et non limitatif.

L'épaisseur des brins est comprise entre 2 et 5 mm.

La distance de deux brins parallèles adjacents est comprise entre 2 et 6 mm. L'épaisseur de la grille est comprise entre 3 et 10 mm.

Les dimensions intérieures d'une maille sont comprises entre 2 x 2 mm et 6 x 6 mm. Le poids de la grille est compris entre 0,6 et 1.5 kg/m2.

La proportion de vide dans la grille est comprise entre 40 et 70 %. Sur le plan de la résistance mécanique de la grille, la charge de rupture à la traction est de l'ordre de : 4,5 kN/m en cas de traction longitudinale (3 à 10 kN/m), et 5,0 kN/m en cas de traction diagonale (3 à 12 kN/m). L'allongement à la rupture est de l'ordre de : 75 % en cas de traction longitudinale (50 à 85%), et 65 % en cas de traction diagonale (50 à 80%). La déformabilité sous une charge de 10 kg/cm2 est inférieure ou égale à 35 %.

Selon un autre mode de réalisation de l'invention, la grille est obtenue par extrusion.

La gaine ainsi constituée autour du câble, sans y être fixée, permet un glissement relatif du câble par rapport à la gaine en cas de dilatation thermique du câble, tout en assurant la protection du câble contre les agressions du sol lors de l'enfouissement du câble dans une tranchée, et du remblai de la tranchée.

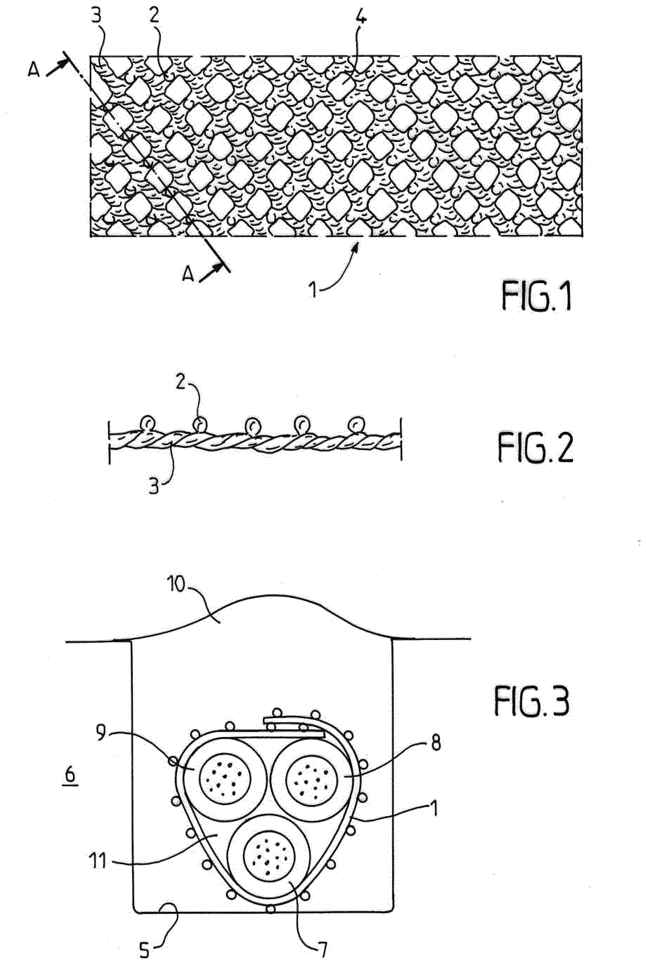

Dans l'exemple de réalisation de la figure 3, une tranchée 5 a été ouverte dans le sol 6. Un ensemble de trois câbles 7,8,9, enveloppé par une gaine constituée par la grille 1, a été placé dans la tranchée 5 et recouvert par un remblai 10.

Du fait de la présence des mailles, la gaine laisse passer les éléments fins du remblai, comme la terre fine, vers les câbles (effet de criblage), assurant ainsi un contact direct de la terre fine 11 avec les câbles, ce qui favorise considérablement l'évacuation vers le remblai de la chaleur émise par les câbles lorsqu'ils sont parcourus par un courant électrique. Cette évacuation vers le remblai de la chaleur émise par un câble constitue un progrès majeur par rapport aux gaines en géotextile ou en non-tissé, qui isolent le câble du remblai, limitant ainsi l'évacuation de chaleur et imposant une réduction de la capacité de transit électrique du câble.

La mise en place autour du câble de la gaine selon l'invention est compatible avec toutes les techniques d'enrobage connues.

La gaine peut être posée au sol, le câble posé sur la gaine, l'enrobage réalisé, et le câble enrobé directement enfoui ou reposé sur le sol avant reprise pour enfouissement. Le câble peut être déroulé d'un touret, la gaine aussi, l'enrobage réalisé et le câble enrobé enroulé sur un touret, ou directement enfoui.

L'enfouissement du câble peut avantageusement être réalisé au moyen d'une trancheuse, c'est-à-dire d'une machine qui, simultanément et au cours de sa progression, creuse la tranchée, et remblaie la tranchée. Entre le creusement et le remblayage intervient l'enfouissement du câble, qui peut être assuré manuellement ou mécaniquement. Ainsi, une fois revêtu de sa grille de protection, par exemple à la sortie de la spiraleuse, le câble peut être posé au sol avant reprise pour enfouissement par la trancheuse ou peut être posé manuellement dans la tranchée. Le câble peut aussi être enroulé sur un touret pour être repris ultérieurement par la trancheuse ou posé manuellement dans la tranchée. Le câble peut aussi être introduit directement dans la trancheuse pour enfouissement, sans passer par les étapes de dépose au sol et/ou d'enroulage sur un touret.

Dans ce cas, l'outil de fixation de la grille autour du câble, ou du réseau à protéger, à savoir, à titre d'exemple, la spiraleuse, est avantageusement posé directement sur la trancheuse.

La gaine a été décrite sous forme d'une grille en PEHD réalisée par extrusion ou par assemblage de deux réseaux de brins parallèles. Avantageusement, la structure de la grille est allégée par la présence de bulles, ce qui donne de la souplesse à la gaine et facilite l'enrobage du câble. Par ailleurs, la gaine peut être constituée en des matières telles que PEBD, Polyester, PVC ou autre, et la forme des mailles peut être circulaire.

De préférence, la fixation de la gaine sur elle-même, autour du câble, est réalisée par spiralage, les fils de spiralage étant disposés avec un pas nettement supérieur aux dimensions d'une maille de la grille, et de préférence compris entre 2 et 7 cm.

Avec une gaine de protection constituée sous forme de grille, telle que décrite ci-dessus, d'une part la protection mécanique du câble contre les constituants du remblai est assurée, d'autre part les mailles de la grille assurent le contact direct du câble et des constituants fins du remblai, et l'évacuation vers le remblai de la chaleur émise par le câble.

## Revendications

1. Procédé de protection d'un câble enfoui et recouvert d'un remblai, comprenant les étapes de :
a- disposer une bande longitudinale au contact du câble,
b- enrouler cette bande sur elle-même autour du câble,
c- fixer ladite bande sur elle-même,
d- placer l'ensemble du câble et de la bande dans une tranchée,
e- remblayer la tranchée,
**caractérisé en ce qu'**il comporte l'étape initiale de
f- prendre pour les étapes a-d une bande longitudinale en forme de grille à mailles de dimensions comprises entre 2 x 2 et 6 x 6 mm, constituée par deux réseaux de brins parallèles, et **en ce que** à l'étape e- les mailles de la grille assurent le passage de la terre fine du remblai jusqu'au contact direct du câble.

2. Procédé selon la revendication 1 **caractérisé en ce que** la grille (1) est en PEHD, PEBD, PVC, ou Polyester.

3. Procédé selon la revendication 1 **caractérisé en ce que** la grille (1) présente une épaisseur comprise entre 3 et 10 mm.

4. Gaine adaptée pour la protection d'un câble enfoui et recouvert d'un remblai selon la revendication 1, **caractérisée en ce qu'**elle est en forme de grille (1) à mailles de dimensions comprises entre 2 x 2 et 6 x 6 mm, constituée par deux réseaux de brins parallèles dont les mailles (4) assurent le passage de la terre fine du remblai (10) jusqu'au contact direct du câble (7, 8, 9).

5. Gaine selon la revendication 4 **caractérisée en ce que**, la direction des brins (2) d'un réseau fait avec la direction des brins (3) de l'autre réseau, un angle compris entre 75 et 90°.

6. Gaine selon la revendication 5 **caractérisée en ce que** l'épaisseur des brins (2, 3) est comprise entre 2 et 5 mm.

7. Gaine selon la revendication 4 **caractérisée en ce que** la grille présente une épaisseur comprise entre 3 et 10 mm.

## Patentansprüche

1. Verfahren zum Schutz eines Kabels, das von einem Füllmaterial umgeben und bedeckt ist, umfassend die folgenden Schritte:
a. Anordnen eines längs gerichteten Bands in Kontakt mit dem Kabel,
b. Wickeln dieses Bands auf sich selbst um das Kabel,
c. Fixieren des Bands auf sich selbst,
d. Platzieren der Einheit des Kabels und des Bands in einem Kanal,
e. Auffüllen des Kanals,
**dadurch gekennzeichnet, dass** es den Folgenden anfänglichen Schritt umfasst:
f. Verwenden für die Schritte a - d eines längs gerichteten Bands in Form eines Gitters mit Maschen mit Abmessungen zwischen 2 x 2 und 6 x 6 mm, das aus zwei Netzen mit parallelen Strängen besteht, und dadurch, dass in Schritt e die Maschen des Gitters den Durchgang der feinen Erde des Füllmaterials bis zum direkten Kontakt mit dem Kabel sicherstellen.

2. Verfahren nach Anspruch 1, **dadurch gekennzeichnet, dass** das Gitter (1) aus PEHD, PEBD, PVC oder Polyester ist.

3. Verfahren nach Anspruch 1, **dadurch gekennzeichnet, dass** das Gitter eine Dicke aufweist, die im Bereich zwischen 3 und 10 mm liegt.

4. Hülle, ausgelegt für den Schutz eines Kabels, das von einem Füllmaterial umgeben und bedeckt ist, nach Anspruch 1, **dadurch gekennzeichnet, dass** sie die Form eines Gitters (1) mit Maschen mit Abmessungen im Bereich zwischen 2 x 2 und 6 x 6 mm aufweist, das aus zwei Netzen mit parallelen Strängen besteht, deren Maschen (4) den Durchgang von feiner Erde des Füllmaterials (10) bis zum direkten Kontakt des Kabels (7, 8, 9) sicherstellen.

5. Hülle nach Anspruch 4, **dadurch gekennzeichnet, dass** die Richtung der Stränge (2) eines Netzes mit der Richtung der Stränge (3) des anderen Netzes einen Winkel bildet, der im Bereich zwischen 75 und 90º liegt.

6. Hülle nach Anspruch 5, **dadurch gekennzeichnet, dass** die Dicke der Stränge (2, 3) im Bereich zwischen 2 und 5 mm liegt.

7. Hülle nach Anspruch 4, **dadurch gekennzeichnet, dass** das Gitter eine Dicke aufweist, die im Bereich zwischen 3 und 10 mm liegt.

## Claims

1. A method for protecting a buried cable covered with a backfill, comprising the following steps:
a- arranging a longitudinal strip in contact with the cable,
b- winding said strip on itself around the cable,
c- fastening said strip on itself,
d- placing the assembly of the cable and the strip in a trench,
e- backfilling the trench,
**characterized in that** it includes the initial step of
f- taking, for steps a-d, a longitudinal strip in the form of a mesh grid with dimensions of between 2x2 and 6x6 mm, made up of two networks of parallel strands, and **in that** in step e- the meshes of the grid guarantee the passage of fine dirt from the backfill into direct contact with the cable.

2. The method according to claim 1, **characterized in that** the grid (1) is made from HDPE, LDPE, PVC or Polyester.

3. The method according to claim 1, **characterized in that** the grid (1) has a thickness of between 3 and 10 mm.

4. A sheath suitable for protecting a buried cable covered with a backfill according to claim 1, **characterized in that** it is in the form of a grid (1) with meshes having dimensions of between 2x2 and 6x6 mm, made up of two networks of parallel strands whereof the meshes (4) guarantee the passage of fine dirt from the backfill (10) into direct contact with the cable (7, 8, 9).

5. The sheath according to claim 4, **characterized in that** the direction of the strands (2) of one network forms, with the direction of the strands (3) of the other network, an angle of between 75 and 90°.

6. The sheath according to claim 5, **characterized in that** the thickness of the strands (2, 3) is between 2 and 5 mm.

7. The sheath according to claim 4, **characterized in that** the grid has a thickness of between 3 and 10 mm.
